# EUROPEAN PATENT SPECIFICATION

(11) **EP 0 997 341 B1**
(45) Date of publication and mention of the grant of the patent: **28.09.2005**
(21) Application number: 99121478.4
(22) Date of filing: 28.10.1999
(51) Int. Cl.: B60N 2/02

(54) **Control device for movable member**
Steuervorrichtung für bewegbares Teil
Dispositif de commande pour élément mobile

(30) Priority: 29.10.1998 JP 30839198; 25.02.1999 JP 4827199
(43) Date of publication of application: 03.05.2000
(73) Proprietor: AISIN SEIKI KABUSHIKI KAISHA, Aichi-ken (JP)
(72) Inventor: Oka, Toshimitsu, Okazaki-shi, Aichi-ken (JP); Aoki, Kohji, Nagoya-shi, Aichi-ken (JP); Kanie, Hideyuki, Anjo-shi, Aichi-ken (JP); Ishikawa, Hitoshi, Hekinan-shi, Aichi-ken (JP)
(74) Representative: TBK-Patent

(56) References cited:
- EP-A- 0 082 664
- EP-A- 0 697 305
- DE-A- 19 706 297
- GB-A- 2 060 944
- GB-A- 2 205 185
- US-A- 4 510 426
- PATENT ABSTRACTS OF JAPAN vol. 1998, no. 5, 30 April 1998 (1998-04-30) -& JP 10 023787 A (NILES PARTS CO LTD), 23 January 1998 (1998-01-23)

## Description

The present invention is directed to a control system associated with a movable member and operated in such a manner that a specific position of the movable member such as a vehicular seat is memorized in a memory and even though the movable member is transferred to another position, the movable member can be returned to the specific position by means of an easy or simple switch operation.

### [Prior Art]

In recent years, in vehicles , for establishing a suitable attitude of an occupant when he/she sits on a seat device, the seat device is configured so that its portions are transferred to specific positions depending on his/her outer profile and the set positions are fed, as signals, to a memory of a controller. When another occupant person sits on the seat device, sometimes the portions of the seat may be transferred to other positions for his/her own best attitude. Thereafter, if the occupant wants to sit on the seat device, when the occupant pushes a button of the controller, on the basis of the memorized set position signals, the controller moves the portions of the seat device to the respective set positions. Such a seat device, which is called a 'memory seat', is developed for relieving seat related adjusting efforts of the occupant when he/she gets in and/or out the vehicle.

As is well known, the seat device includes a seat-cushion, a seat-back hinged to a rear portion of the seat-cushion, and a head-rest mounted telescopically to a top portion of the seat-back. The seat device also includes a sliding motor, a reclining motor, a front-vertical motor, a rear-vertical motor, and a head-rest motor for moving the whole seat device in the vehicle-longitudinal direction, bringing the seat-back into a desired or reclined angular position, moving a front portion of the seat-cushion in the vertical direction, moving a rear portion of the seat-cushion in the vertical direction, and establishing telescopic movements of the head-rest relative to the seat-back, respectively. These motors are under the control of the controller. After the occupant brings these members to his/her favorite or suitable positions, the resultant positions are memorized. Even though position change is made relating to at least one of the seat-cushion per se, the front portion of the seat-cushion, the rear-portion of the seat-cushion, the seat-back, and the head-rest, when a restoration switch or button is turned on, the controller returns the member to the set or memorized position by driving the corresponding motor.

In the foregoing structure, the current position of each member or portion is determined by a rotational condition of the corresponding motor, which requires a position sensor and related parts for each motor. In detail, for example, 'NEW CAR FEATURES ON TOYOTA CROWN MAJESTA' edited and issued by Toyota Motor Corporation and published October, 1991 indicates , on its pages 5-64 and 5-65, that a shaft of the motor is provided with a magnet, a rotational condition of the magnet is detected by a hole element opposed to the magnet, and the resultant output from the hole element or the motor rotational signal is fed to the controller by way of a harness.

However, in the foregoing structure, each motor has to be provided therewith its own magnet, hole element, and wire harness, with the result that the sole seat device has to include a considerable number of parts, providing such parts to the motor is very cumbersome, and the surrounding of the motor gets complex . In addition, such an arrangement has to be provided to each of other seat, the foregoing drawbacks are multiplied.

GB 2 060 944 A discloses a power-operated seat-adjusting apparatus for vehicles according to the preamble of claim 1.

It is a principal object of the present invention to provide a control system for a movable member without the foregoing drawbacks.

This object is achieved by the control system according to independent claim 1.

Further advantageous developments are set out in the dependent claims.

The above and other objects, features and advantages of the present invention will be more apparent and more readily appreciated from the following detailed description of preferred exemplary embodiments of the present invention, taken in connection with the accompanying drawings, in which;
FIG.1 is a schematic diagram of an embodiment of a control system for a movable member in accordance with the present invention;
FIG.2 is a block diagram of a motor pulse generating circuit of a device for determining a rotational number of a do motor which is employed in the system shown in FIG.1;
FIG.3 is a view showing how a switched capacitance filter of the motor pulse generating circuit shown in FIG.2 operates;
FIG.4 is a detailed content of the motor pulse generating circuit shown in FIG.1; and
FIG.5 shows graphs each of which indicative of waveform at various points in the motor pulse generating circuit shown in FIG.1;
FIG.6 is a flowchart providing a control of the system shown in FIG.1;
FIG.7 is a subroutine flowchart of manual procedure shown in FIG.6;
FIG.8 is a subroutine flowchart of restoration procedure shown in FIG.6;
FIG.9 is a subroutine flowchart of memorizing procedure shown in FIG.6;
FIG.10 is a subroutine flowchart of manual procedure shown in FIG.6 as an improved version of the subroutine shown in FIG.7;
Fig.11 is a subroutine flowchart of over-run correction procedure;
FIG.12 is a conception structure of over-run correction MAP; and
FIG.13 shows comparison graphs for proving the effects of over-run correction.

### DETAILED DESCRIPTION OF THE PRESENT INVENTION

Preferred embodiments of the present invention will be described hereinafter in detail with reference to the accompanying drawings.

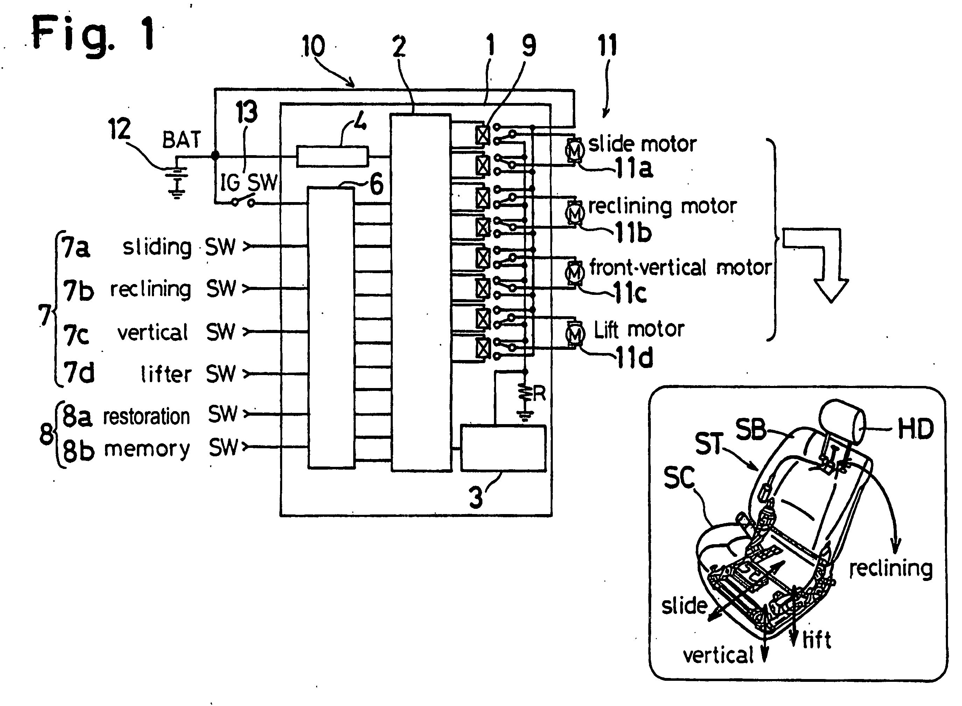

First of all, with reference to FIG.1, there is illustrated a memory seat device 10 to which is applied a control system for a movable member in accordance with an embodiment of the present invention. The memory seat device 10 includes a controller 1 which is connected to a power source 12 which is in the form of a battery having a positive texminal and a negative terminal. The negative terminal of the battery 12 is grounded, while the positive terminal of the battery 12 is connected to a central processing unit or CPU 2 by way of an ignition switch 13 and an input interface circuit 6. Thus, when the ignition switch 13 is turned on, an electric voltage of 12 volts is applied to the CPU 2. In addition, the plus terminal of the battery 12 is connected to the CPU 2 by way of a stabilizing circuit 4 for applying an electric voltage of 5 volts to the CPU 2 in continual manner. Subject to the voltage applications from both of the stabilizing circuit 4 and the input interface circuit 6, the CPU 2 becomes ready for operation.

An operational switching group 7 includes a sliding switch 7a, a reclining switch 7b, a vertical switch 7c, and a lifter switch 7d. The sliding switch 7a is used to move a seat device ST forth and back along a pair of rails (not shown)fixed on a vehicle-body floor (not shown). The reclining switch 7b is used for reclining a seat-back SB forth and back relative to a seat-cushion SC to which the seat-back SB is hinged. The vertical switch 7c is used to move a front side of the seat-cushion SC on which an occupant sits in the vertical direction. The lifter switch 7d is used to move a rear side of the seat-cushion SC in the vertical direction. When the switches 7a, 7b, 7c, and 7d are turned on in one direction (in the other direction), motors 11a, 11b, 11c, and 11d are driven in one direction (in the other direction), respectively. It is to be noted that a position of a head-rest HD can be adjusted relative to the seat-back SB by employing a motor and a corresponding switch.

Theses switches 7a, 7b, 7c, and 7d are connected to the CPU 2 by way of the input interface circuit 6 and states (ON-in-one-direction, ON-in-the-other-direction, and OFF) of each motor are memorized in memory means in the CPU 2. Current positions of the seat-cushion SC relative to the rails, the seat-back relative to the seat-cushion SC, the front side of the seat cushion SC, and the rear side of the seat-cushion SC are also memorized in the memory means when a memorizing switch 8b and a restoration switch 8a are turned on concurrently. If only the restoration switch 8a is turned on, even though the seat cushion SC per se, the seat-back SB, the front side of the seat cushion SC, or the rear side of the seat-cushion SC is moved after turning-on of the memorizing switch 8b, the moved member or portion is returned automatically to the memorized position. The memorizing switch 8b and the restoration switch 8a constitute a memory related switch group 8 and are connected to the CPU 2 by way of the input interface circuit 6.

Thus, the positions of the foregoing members or portions can be adjusted in suitable manner in light of an outer profile of an occupant who sits on the seat device ST. Other seat devices (not shown) are of such a facility optionally.

At an output side of the CPU 2, a switching relay device 9 is provided for driving a slide motor 11a, a reclining motor 11b, a vertical-front motor 11c, and a lift motor 11d independently. Each motor is in the form of a bi-directional motor and is driven in either of one and the other directions by the well-known relay function of the switching relay device 9. The motors 11a-11d are same in motor drive control and when a specific motor is chosen to be driven, the corresponding coil (not indicated) of the switching relay device 9 is energized or activated.

For determining or measuring a current which flows through the motors 11a-11d, a motor pulse generating circuit 3 is provided. An output voltage of the switching relay device 9 is driven by a resistor R and the resultant current is fed as a motor current signal to a motor pulse generating circuit 3 which generates a ripple pulse signal whose number of pulses per unit time duration varies with rotational number of each of the motors 11a-11d. Such a ripple pulse is fed to the CPU 2.

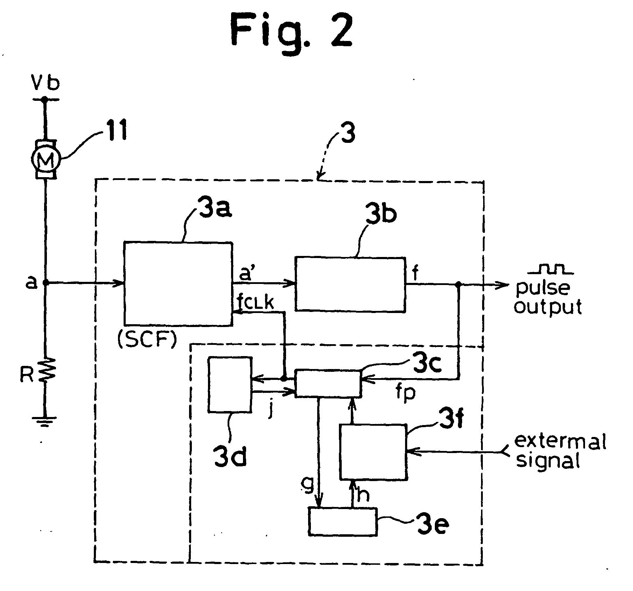

As illustrated in FIG.2, the motor pulse generating circuit 3 includes a switched capacitance filter (hereinafter called simply SCF) 3a, a ripple pulse shaping circuit 3b, and a pulse generating circuit 3g. The pulse generating circuit 3g has a phase locked loop circuit (hereinafter called simply PLL) 3c, a frequency demultiplier 3d, a low pass filter (hereinafter simply called LPF) 3e, and an add-substrate circuit 3f.

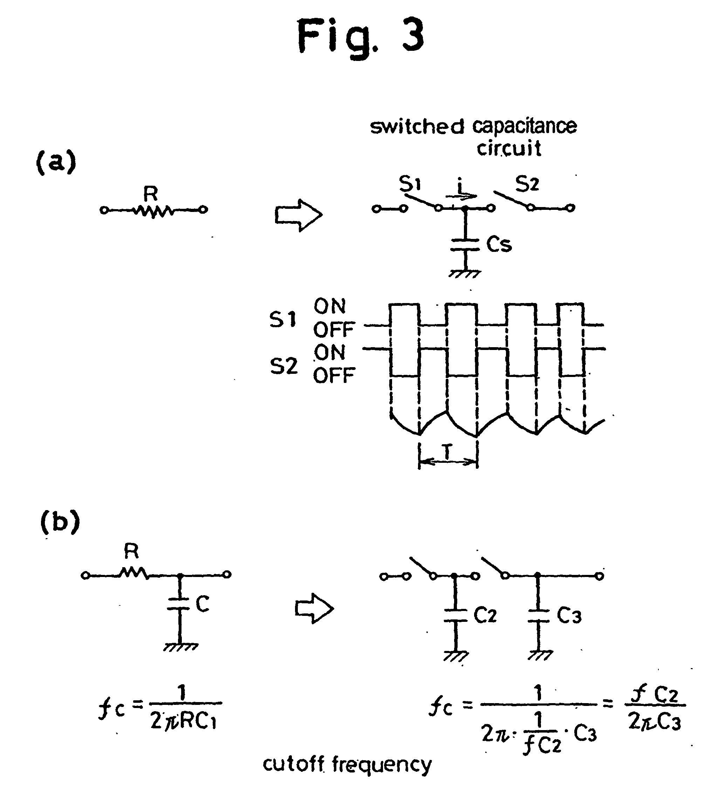

As can be understood easily from FIG.3, the switched capacitance filter 3a is an application version of a well-known switched capacitance circuit which is constituted by a pair of analogue switches S1 and S2 and a capacitor Cs. If the switches S1 and S2 are turned on and off alternatively at a cycle of T, an electric current i flows which is expressed in a formula of i=V/(1/fc).

Thus, the switched capacitance can be regarded as an equivalent resistor R. The cut-off frequency fc of a circuit which employs such a switched capacitance becomes variable which depends on a frequency for turning on and off the switches alternatively. In case of switched capacitance filter, instead of frequency, clock input is available. Such a cut-off frequency fc can be expressed as the formula indicated in FIG.3. As the switched capacitance filter, a commercially available IC supplied from National Semiconductor under the item symbol of MF6-50. This has a noise reduction function and provides a cutoff frequency of fc = fCLK /N where fCLK and N are a clock input frequency and a constant for example 50, respectively.

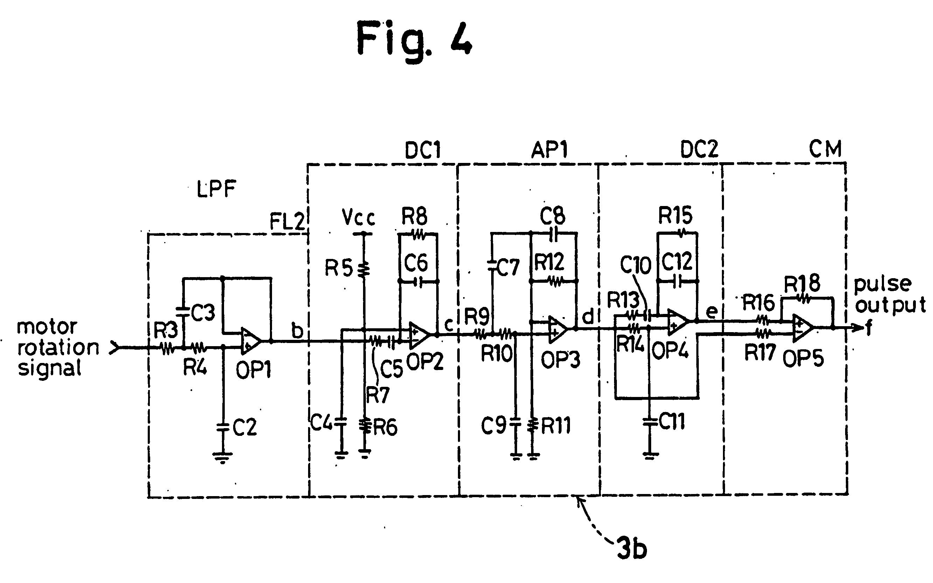

The ripple pulse shaping circuit 3b, as can be seen from FIG.4, includes a high frequency active filter FL2, a first differentiating circuit DC1, a second differentiating circuit DC2, an amplifier AP1, and a comparator CM.

In the high frequency active filter FL2, a series of resistors R3 and R4 are coupled to a non-inverting terminal of an operational amplifier OP1 which is also grounded to the earth by way of a capacitor C2. An inverting terminal of the operational amplifier OP1 is connected via a capacitor C3 to a point at which the resistors meet for feedback. The filter FL2 serves for eliminating a high frequency component of a motor rotational signal. In detail, for example, noise component above the maximum rotational speed (for example 6000 rpm) can be eliminated by increasing its damping factor, which brings that the filter FL2 acts as a low pass filter which deletes noise superposed on the motor rotational signal or ripple frequency.

The first differentiating circuit DC1 is connected to an output terminal of the low pass filter LPF and differentiates a signal outputted therefrom for damping or decaying the do component thereof. A series connection of a resistor R7 and a coupling capacitor C5 is connected to an inverting terminal of an operational amplifier OP2. A voltage divided by a series of resistors R5 and R6 is applied to a non-inverting terminal of the operational amplifier OP2 and a point at which the resistors R5 and R6 connect is coupled with a bypass capacitor C4. A parallel connection of a resistor R8 and a capacitor C6 is connected between the non-inverting input terminal and an output terminal of the operational amplifier OP2.

An amplifier AP1, which serves for amplifying an output signal of the first differentiating circuit DC1, includes an operational amplifier OP3 whose non-inverting input terminal is connected to the output terminal of the operational amplifier OP2 via a series of resistors R9 and R10. The non-inverting input terminal of the operational amplifier OP3 is also grounded by way of a capacitor C9. A capacitor C7 is interposed between an inverting terminal of the operational amplifier OP3 and a point at which the resistors R9 and R10 are connected together. The inverting terminal of the operational amplifier OP3 is grounded by way of a resistor R11. A capacitor C8 and a resistor R12 which are arranged in parallel are connected between the inverting input terminal and an output terminal of the operational amplifier OP3.

The second differentiating circuit DC2 is connected to the output terminal of the operational amplifier OP3 of the amplifier AP1 and differentiates a signal outputted therefrom for establishing a phase shift of 90 degrees. The second differentiating circuit DC2 includes an operational amplifier OP4 whose non-inverting input terminal is connected to the output terminal of the operational amplifier OP3 of the Amplifier AP1 via a resistor R14. The non-inverting input terminal of the operational amplifier OP4 is grounded by way of a capacitor C11. Between the output terminal of the operational amplifier OP3 and an inverting input terminal of the operational amplifier OP4, there are interposed a resistor R13 and a capacitor C10 which are arranged in series. A resistor R15 and a capacitor C12 which are arranged in parallel are connected between the inverting input terminal and an output terminal of the operational amplifier OP4.

The comparator CM, which compares output signals from the respective output terminal of the second differentiating circuit DC2 and output terminal of the amplifier circuit AP1, includes an operational amplifier OP5 whose inverting input terminal is connected via a resistor R17 to the output terminal of the operational amplifier OP3 of the amplifier circuit AP1. A non-inverting input terminal of the operational amplifier OP5 is connected via a resistor R16 to the output terminal of the operational amplifier OP4 of the second differentiating circuit DC2. A resistor R18 is connected between the non-inverting input terminal and the output terminal of the operational amplifier OP5. From the output terminal of the operational amplifier OP5, a rectangular pulse signal or a ripple pulse signal is set to be outputted which is corresponded to the ripple frequency and such a rectangular pulse signal is fed to the CPU 2 of the control device 1.

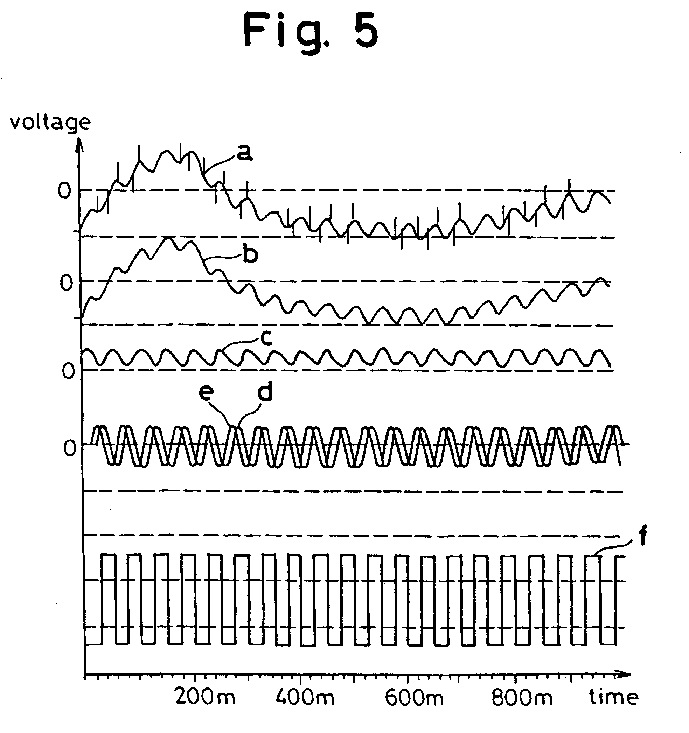

The current flowing through a motor 11 which means any one of the motors 11a-11d can be appreciated as a voltage signal or motor rotational signal which is in proportion thereto in magnitude. This voltage signal is superposed with ripple together with noise and has a wave-shape (a) indicated in FIG. 5. The ripple is inevitable, as is well known, when do motor is employed.

During passing through the switched capacitance filter 3a, the noise is deleted or eliminated from the voltage signal and on the resultant voltage signal another noise due to the clock input to the switched capacitance filter 3a. However, passing such a voltage signal through the low pass filter LPF makes the voltage signal smooth without the noise and becomes to have a wave-shape (b). If such a voltage signal having the wave-shape (b) is passed through the first differentiating circuit DC1, the voltage signal is differentiated to damp or decay its do component and the resultant voltage signal to have a wave-shape (o). Furthermore, if passing the voltage signal through the amplifier AP1, the resultant or amplified voltage signal becomes to have a wave-shape (d). Thereafter, after passing through the second differentiating circuit DC2, the voltage signal becomes to have a wave-shape (e) which delays in a phase of 90 degrees with respect to the wave-shape (d). Then, comparing the voltage signal having the wave-shape (d) which is outputted from the amplifier AP1 and the voltage signal having the wave-shape (e) which is outputted from the second differentiating circuit DC2, the comparator CM issues the pulse signal having a wave-shape (f).

In the foregoing circuit, feedback control of the pulse signal having the wave-shape (f) is established so as to make the frequency of the ripple pulse the cut-off frequency fo of the switched capacitance filter 3a. In detail, whenever the pulse signal having the wave-shape (f) is inputted or fed to the PLL 3c, the PLL 3c outputs a frequency of 50fp which is derived from the formula of fc=FCLk/N where N=50. The output of the PLL 3c having a frequency of 60fp divided by 60 at the frequency demultiplier 3d and the frequency demultiplier 3d fed the resultant frequency of fp to the PLL 3c. In brief, a phase control of the output signal of the frequency demultiplier 3d is made to oscillate a frequency which is in coincidence with the frequency fp of ripple pulse inputted to the PLL 3c. Thus, the cut-off frequency fo of the switched capacitance filter 3a becomes to have a linear relationship relative to the pulse output or ripple pulse.

In addition, for ensuring the stable output of the PLL 3c at an initial stage of the pulse generating circuit 3g, the PLL 3c is added with the LPF 3e and the add-subtract circuit 3f. The oscillation of the PLL 3c at initial stage can be kept at a voltage level by applying a battery voltage Vb for driving the motor 11a (11b, 11c, 11d) to the add-subtraot circuit 3f as an outside signal thereof. Immediately when the oscillation of the PLL 3c becomes its steady stage, the PLL 3c begins oscillate based on the ripple pulse signal inputted to the PLL 3c.

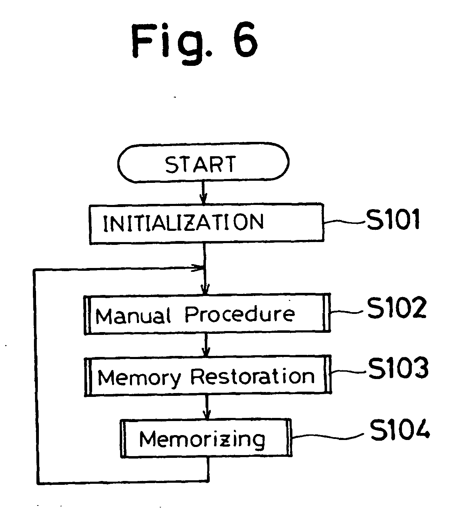

With reference to FIG.6, an operation of the memory seat device illustrated in FIG 1 is explained. After insertion of a key (not shown) in a key cylinder (not shown), when the key is rotated through a fixed angle as usual manner, the ignition key 13 is turned on, thereby applying electric power to the control unit 1 from the battery 12. Then, a main program stored in the CPU 2 in the control unit 1 is executed every 2 milliseconds according to a flowchart shown in FIG.6.

In the main program, first of all, an initialization is made to check ROMs and RAMs, set memories or counters to zeros or other starting values, and check whether or not the system operates normally. Thereafter, at step S102, a manual procedure is executed.

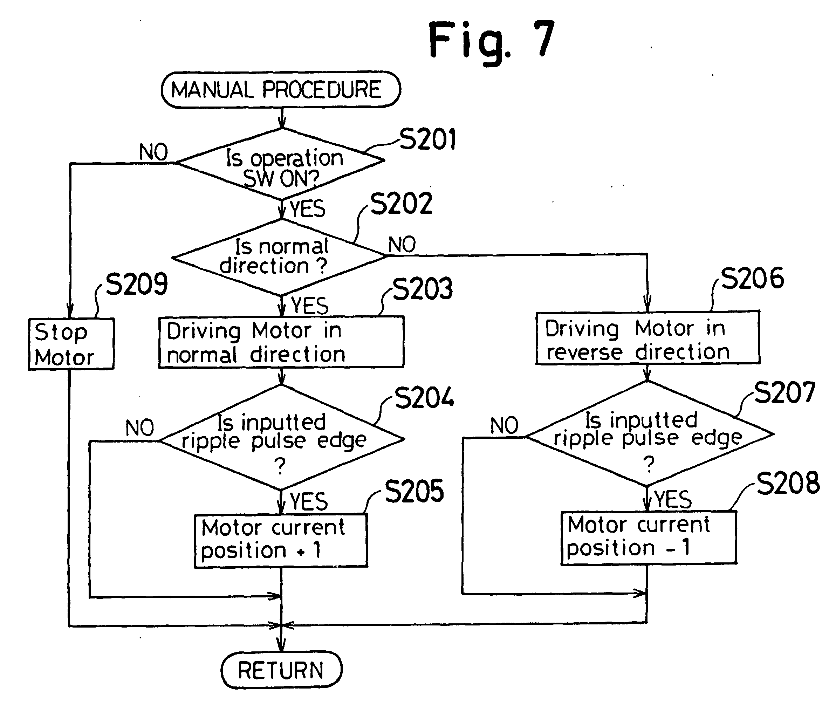

In the manual procedure as shown in FIG.7, first of all, at step S201, it is checked whether or not one or more of the operation switches 7a-7d is closed by the occupant. The motor control is common in the motors 11a-11d, by which specific motor operations of the respective motors 11a-11d are not made.

If the result of step S201 indicates that the operation switch 7 is not closed which fails to request of any movements of the memory seat, the motor 11 is stopped at step S209 and this manual procedure per se is terminated. If the result of step S201 indicates of the closed condition of the operation switch 7, step S202 is executed to check, depending the closed condition of the operation switch, whether the motor 11 is requested to drive in the normal direction or reverse direction. Such normal and reverse directions are associated , at the vehicle design stage, with to each of the movement of the seat device in the vehicle-longitudinal direction, the seat-back reclining direction, and the seat-cushion vertical movements. In case of request for the normal direction, at step S203, the CPU 2 activates the switching relay 9 to drive the motor 11 in the normal direction.

At next step or step S204, a check is made whether or not an edge of the ripple pulse is fed to the CPU 2 from the motor pulse generating circuit 3. If not, the manual procedure is terminated. If the result is true, at step S205, a motor position counter which stores the current position of the motor 11 is added with '1'. The resultant value is then stored in the motor position counter which indicates the new current position of the motor 11.

On the other hand, the result of step S202 indicates of the reverse direction in driving motor 11, at step 206, the CPU 2 activates the switching relay 9 to drive the motor 11 in the reverse direction.

At next step or step S207, a check is made whether or not an edge of the ripple pulse is fed to the CPU 2 from the motor pulse generating circuit 3. If not, the manual procedure is terminated. If the result is true, at step S209, the motor position counter which stores the current position of the motor 11 is subtracted with '1'. The resultant value is then stored in the motor position counter which indicates the new current position of the motor 11.

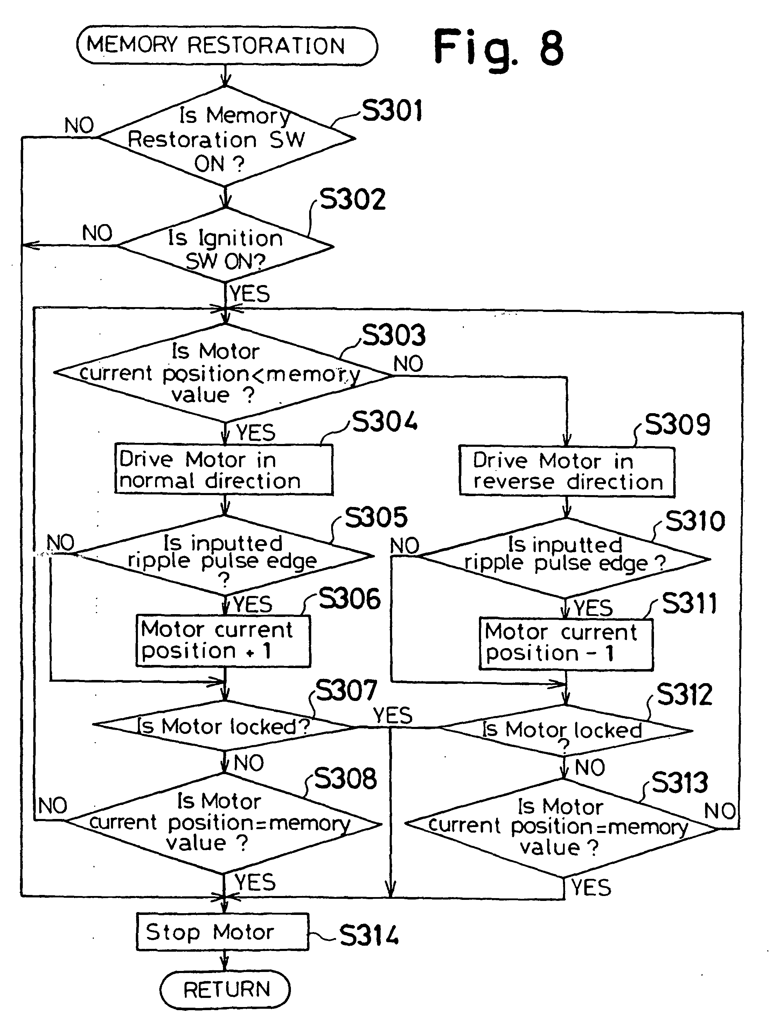

With reference to FIG.8 which provides a control of memory restoration procedure, at step S301, it is checked whether the memory restoration switch 8a is turned on or not. Though if the result is false the control jumps to step S314, if the result of step S301 is true, the CPU 2 recognizes a necessity for an automatically easy adjustment of the memory seat and then execute step S302. At step S302, the ignition switch 13 is examined to be closed or not. If the result is false, step 314 is executed. If true, at step S303, current motor position comparison is made in such a manner that the current motor position stored in the current position memory as mentioned above is compared with a value in a fixed memory which represents the occupants own favorite position in digital. If the current motor position is less than (equal to or larger than) the fixed value, the motor is driven in the normal direction at step S304 (in the reverse direction at step S309).

After the execution of step S304, steps S305-S308 are executed which are similar to steps S310-S313 to be executed after execution of step S309. In steps S305-S308 (steps S309-SS313), in case of the edge input of the ripple pulse, the motor position counter is brought into increment (decrement) when the motor is driven in the normal (reverse) direction, thereby updating the value in the motor position counter. Thereafter, if no pulse input is found within a time period of 0.5 seconds, for example, a motor-look is checked. If the pulse is found within the foregoing time-period, the current motor position is compared to the fixed value. If the result is false, the current position of the memory seat is understood not to return to its initial or originally fixed position and the control is returned to step S303. Thereafter, the steps subsequent to step S303 are executed in repeated manner and if the current motor position becomes the initial position, step S314 is executed for terminating the motor 11.

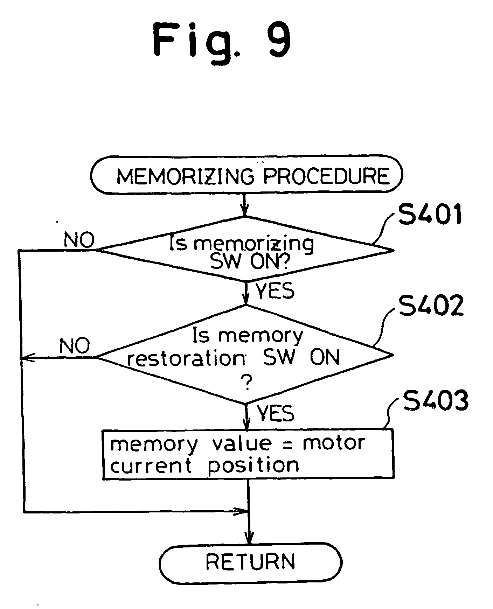

Thereafter, at step S104 in main routine is performed. In detail, referring to FIG.9 which provides a control of memorizing procedure, at step S401 it is checked, whether the memorizing switch 8b is pressed or not . If so, it is understood that a memory request is made and step S402 is executed to check whether or not the restoration switch 8a is pressed . Only when both the memorizing switch 8b and the restoration switch 8a are pressed in concurrency or simultaneously, step S403 is executed for storing the current position of the element of the memory seat as it is into the fixed memory.

Of course, instead of the memory seat, other movable member can be driven under the control of the foregoing controller 1 or its modified version.

In the foregoing control system, the motor pulse generating circuit is provided. The motor pulse generating circuit generates the cut-off frequency which is variable depending on the ripple pulse frequency which is indicative of the rotational number of the motor, which requires no other means for determining the rotational number of the motor. The motor pulse generating circuit can be integrated with the controller. Particularly, the motor pulse generating circuit and the controller can be configured on a common substrate, which results in easier assembly. In addition, only the motor pulse generating circuit can treat plural motors which are to be driven individually, thereby lowering the production cost.

In addition, since the motor pulse generating circuit includes the switched capacitance filter for eliminating noise from the motor, the cut-off frequency of the switched capacitance filter being depended on a clock input thereof, the pulse shaping circuit for generating a ripple pulse signal indicative of the rotational number of the motor by wave-shaping the output of the switched capacitance filter, and the pulse generating circuit providing pulses to the clock input of the switched capacitance filter, the pulses controlling the cut-off frequency on the basis the ripple pulse frequency, the means for determining the rotational number of the motor can be in the form of circuitry in simple manner. The cut-off frequency varies in linear mode when the pulse is applied to the clock-input of the switched capacitance filter for controlling the cut-off frequency based on the ripple pulse, which causes a linear mode follow of the cut-off frequency with the frequency variation of the ripple pulse, thereby enabling an increase of decrement rate of the filter becomes larger depending on the noise. Thus, the correct ripple pulse can be generated depending on the motor rotational number which varies in wide range, thereby coping with motors with much noise.

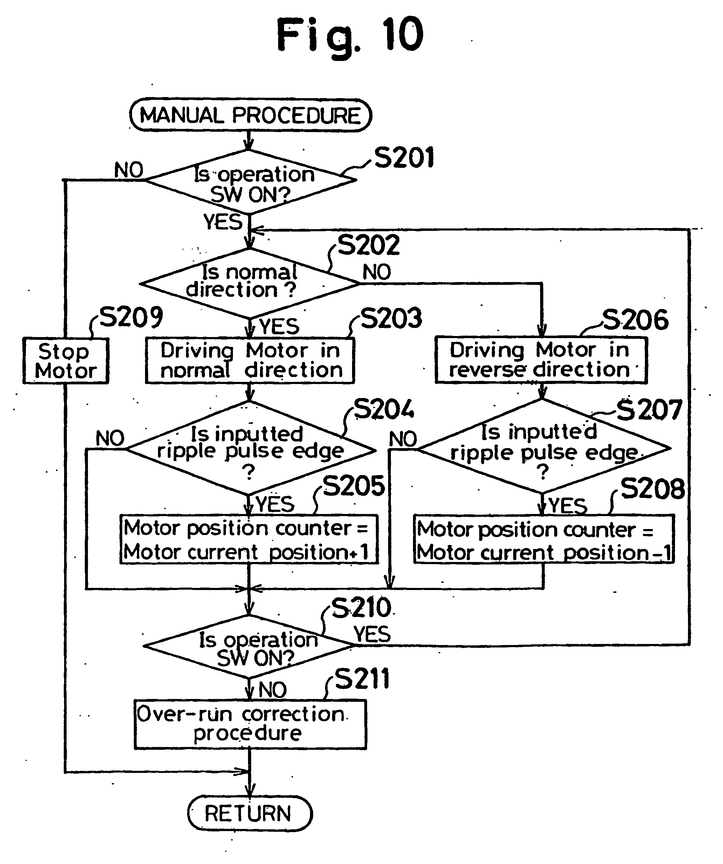

Referring next to FIG.10, there is depicted a flowchart which is in the form of amending the flowchart in FIG.7. That is to say, in addition to the contents in FIG.7, the flowchart in FIG.10 is added with steps S210 and S211, which are only detailed hereinafter.

At step S210, it is checked whether or not the switch 7 is turned on. If the results are true and false, the control is returned to step S202 and step S211 is executed, respectively.

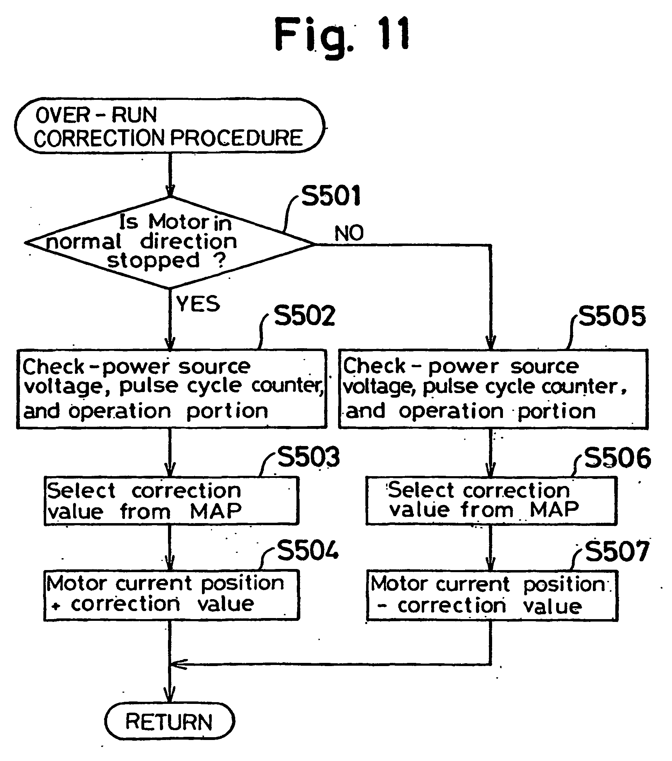

Step S211 is a subroutine for over-run correction and its detailed contents are depicted in FIG.11. The reason why such a subroutine is required is as follows: Even though no current is supplied to the motor 11 upon its termination, the motor 11 tries to operate due to inertia, which means in spite of no ripple pulse generation the member such as the seat ST, seat-cushion SC, seat-back SB or head-rest HD associated to the motor 11 moves. Thus the calculated position based on the number of the ripple pulses of the member becomes different from its actual position, thereby requiring a correction on such a deviation.

Referring to FIG.11 for explaining the over-run routine in detail, at step S501 it is checked whether or not the stopped motor 11 was in normal direction or reverse direction. This can be done by checking the signal for driving the relay 9. If the result is indicative of the normal direction (the reverse direction), steps S502, S503, and S504 (S505, S506, and S507) are executed in turn.

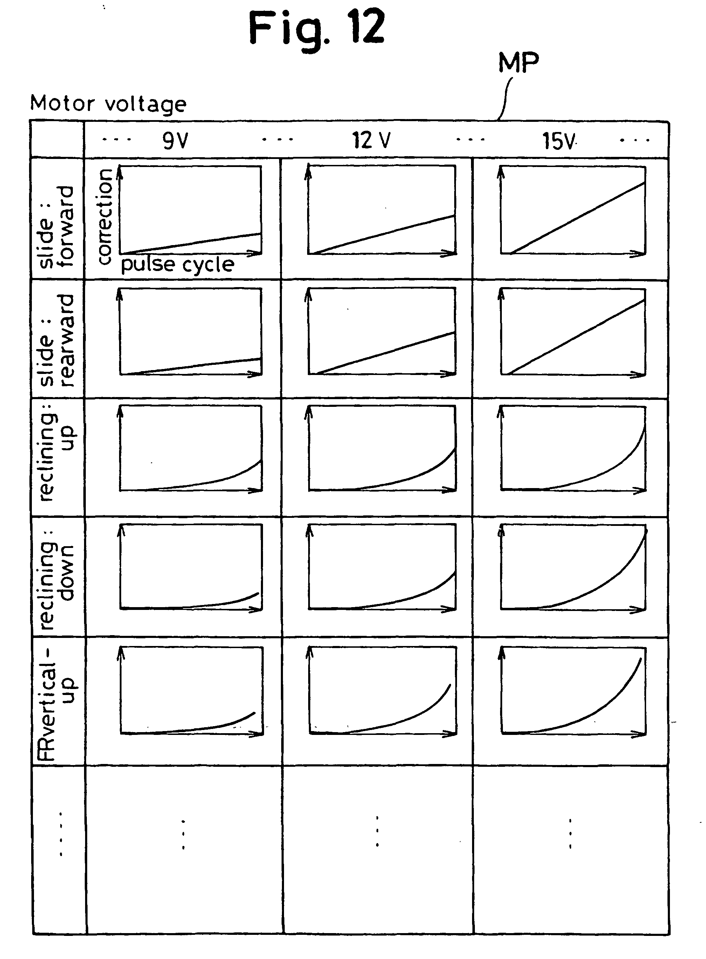

The CPU 2 orders the controller 1 to watch continually the power source voltage supplied to the controller 1 and the motor 11. The CPU 2 watches the period of the ripple pulse inputted as the motor speed from the motor rotational pulse generation circuit 3 which is made by using pulse period counter (not shown) and detects which motor is in operation of the slide motor 11a, the reclining motor 11b and others. Then, recognizing three factors: the motor voltage, the pulse period, and the moved portion, the CPU 2 selects a suitable correction number from correction number map shown in FIG.12 and the resultant correction number is added to the current position number based on the number of ripple pulses. Each correction number in the MAP in FIG.12 is calculated by experiments wherein how many times the shaft of the motor 11 rotates after termination thereof are measured in plural times on the basis of the motor speeds. The MAP per se is stored or held in the CPU 2.

In detail, the correction numbers vary depending on the voltage for driving the motor 11. In light of the fact that when the motor 11 under operation is stopped the voltage for driving the motor 11 is in proportion to the motor rotational number, the correction number is set to be larger (smaller) as the motor speed is larger (smaller). In this case, motor operation conditions are considered. That is to say, motor characteristic, operational direction, pulse period and so on are taken into consideration. For, example, in case where the seat ST is moved along a pair of vehicle-body-lengthwise extended rails, a slant inclination is made on each rail in such manner that a front end of the rail is set to be slightly higher than a rear portion thereof. Thus, the motor rotational number becomes smaller when the frontward movement of the seat ST than when rearward movement thereof, with the result that the correction number is set to be slightly smaller in case of the former than in case of the latter. In addition, in each of the reclining of the seat-back and the headrest movement, the correction number for movement against the gravity is set to be smaller. The correction number in the MAP is set to be changed as an increasing function of the first order or the second order, which makes precise estimating the member movement in consideration of the actual inertia, there by enabling a precise calculation of the over-run movement of the member.

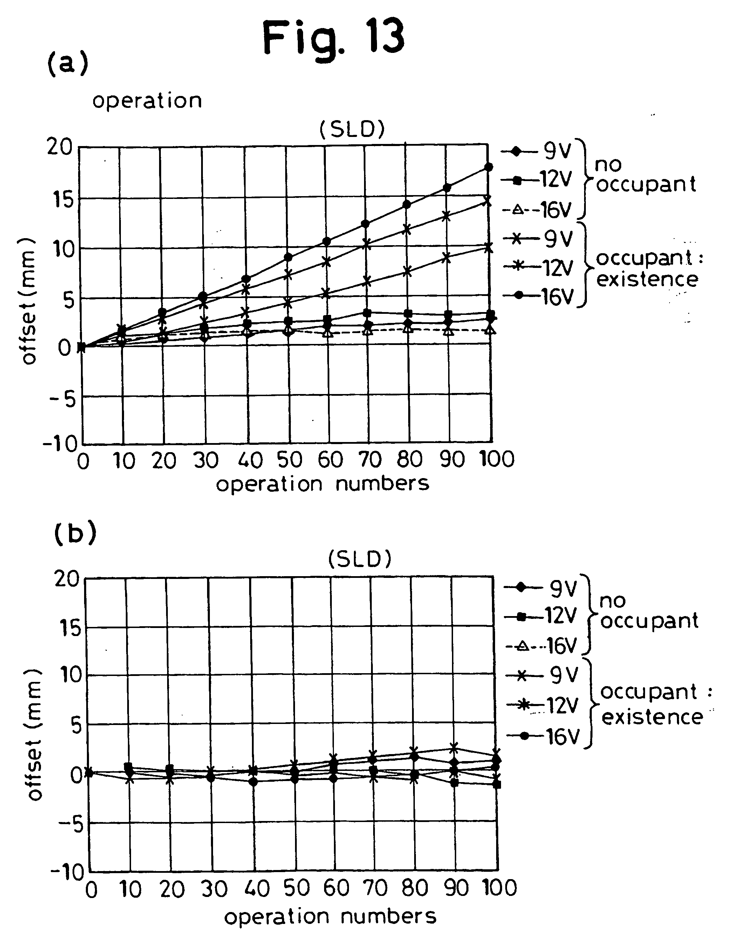

Conventionally, during a time duration required for perfect termination of the motor 11 after ordering the motor 11 to stop, a deviation or an error occurs between the designed seat position based on the ripple pulses and the actual seat position and such an error is added with new one whenever the movement is made. Though the resultant error accumulation causes unexpected deviations as shown in FIG13(a), the foregoing correction makes the deviations as small as possible as shown in FIG.13(b), thereby increasing the device reliability.

In accordance with the second embodiment of the present invention, the motor pulse generating circuit generates the cut-off frequency which is variable depending on the ripple pulse frequency which is indicative of the rotational of the motor, which requires no other means for determining the rotational number of the motor. The movable member is driven by the motor which is in association with the motor pulse generating circuit, with the result that the current position of movable member can be determined in precise by using correction numbers held in the CPU even though the movable member fails to stop at a designed position when the motor is made to be terminated due to its inertia.

If the position of the movable member is defined as its initial position when the controller is applied with the voltage, the displacement or moving amount of the movable member can be calculated in ease.

Making the correction MAP in consideration of motor rotation conditions such as power source voltage, operational direction, pulse cycle, and other motor characteristics establishes more precise determination of the current position of the movable member when the motor is in perfect stopped state.

In addition to the foregoing motor rotation conditions, making the correction MAP depending on each power supply voltage brings more precise determination of the current position of the movable member when the motor is in perfect stopped state.

The invention has thus been shown and described with reference to specific embodiments, however, it should be understood that the invention is in no way limited to the details of the illustrated structures but changes and modifications may be made without departing from the scope of the appended claims.

## Claims

1. A control system for a movable member (ST; HD, SB, SC) comprising
a DC motor (11; 11a, 11b, 11c, 11d) for establishing position transfer of the movable member in such a manner that after a value corresponding to a first position of the movable member is stored in a memory (S104), even if the movable member is in a second position, the moving member is returned to the first position (S103) only upon manipulating a switch (8a),
a switching device (9) for driving the motor in the normal or reverse direction by connecting it to a power source (12) with the appropriate polarity (S203, S206),
a motor pulse generating circuit (3) generating a pulse signal being in synchronization with a movement of the movable member and having a pulse frequency which is indicative of the rotational number of the motor,
position determining means for determining a current position of the movable member in accordance with the counting of the pulse signal of the motor pulse generating circuit (S306, S311),
**characterized in that**
the motor pulse generating circuit is connected to a motor current sensing means (R) connected to the switching device in series, whereby the motor's current is sensed only while the power source voltage is fed to the motor,
and **in that** the control system further comprises
detection means for detecting an instant when the motor is turned off (S210),
storing means (2) for storing a correction value which is indicative of an additional movement of the movable member due to inertia of the motor after its turning-off; and
calculating means for calculating the correct value corresponding to the current position of the movable member by adding the correction value to the value obtained by the position determining means (S211).

2. A control system according to claim 1, wherein the motor pulse generating circuit (3) is connected to a downstream side terminal of said switching device (9) for establishing bi-directional driving of the motor while a power source voltage is being fed.

3. A control system according to claims 1 or 2, wherein the first position is stored when the motor is turned on.

4. A control system according to any one of claims 1 to 3, wherein the correction value is set based on rotational conditions of the motor.

5. A control system according to any one of claims 1 to 3, wherein the correction value is set based on the power source voltage applied to the motor.

6. A control system according to any one of claims 1 to 5, wherein the motor pulse generating circuit (3) generates a cut-off frequency which is variable depending on a ripple pulse frequency which is indicative of a rotational number of the motor.

7. A control system according to claim 6, further comprising
a switched capacitance filter (3a) for eliminating noise from the motor, a cut-off frequency of the switched capacitance filter being dependent on a clock input thereof,
a pulse shaping circuit (3b) for generating a ripple pulse signal indicative of the rotational number of the motor by wave-shaping an output of the switched capacitance filter, and
a pulse generating circuit (3g) providing pulses to the clock input of the switched capacitance filter, the pulses controlling the cut-off frequency on the basis of the ripple pulse frequency.

## Patentansprüche

1. Steuersystem für ein bewegbares Bauteil (ST; HD, SB, SC), mit
einem Gleichstrommotor (11; 11a, 11b, 11c, 11d) zur Errichtung eines Positionstransfers des bewegbaren Bauteils auf eine derartige Weise, dass, nachdem ein Wert entsprechend einer ersten Position des bewegbaren Bauteils in einem Speicher gespeichert ist (S104), auch wenn sich das bewegbare Bauteil in einer zweiten Position befindet, das bewegbare Bauteil nur bei Betätigung eines Schalter (8a) in die erste Position zurückgebracht wird,
Schaltgerät (9) zum Antrieb des Motors in der normalen oder der umgekehrten Richtung, indem er mit einer Energiequelle (12) mit der geeigneten Polarität verbunden wird (S203, S206),
einer Motorimpulserzeugungsschaltung (3), welche ein Impulssignal erzeugt, welches in Synchronisation mit einer Bewegung des bewegbaren Bauteils ist und eine Impulsfrequenz aufweist, welche die Drehzahl des Motors angibt,
einer Positionsbestimmungseinrichtung zur Bestimmung einer gegenwärtigen Position des bewegbaren Bauteils gemäß dem Zählwert des Impulssignals der Motorimpulserzeugungsschaltung (S306, S311),
**dadurch gekennzeichnet, dass**
die Motorimpulserzeugungsschaltung mit einer mit dem Schaltgerät in Reihe geschalteten Motorstromerfassungseinrichtung (R) verbunden ist, wodurch der Motorstrom nur erfasst wird, während an dem Motor die Energiequellenspannung anliegt,
und **dadurch**, dass das Steuersystem zudem umfasst,
eine Erfassungseinrichtung zur Erfassung eines Augenblicks, bei dem der Motor ausgeschaltet wird (S210),
eine Speichereinrichtung (2) zur Speicherung eines Korrekturwerts, welcher eine zusätzliche Bewegung des bewegbaren Bauteils aufgrund von Trägheit des Motors nach seinem Ausschalten angibt, und
eine Berechnungseinrichtung zur Berechnung des korrekten Werts entsprechend der gegenwärtigen Position des bewegbaren Bauteils durch Addition des Korrekturwerts zu dem von der Positionsbestimmungseinrichtung erlangten Wert (S211).

2. Steuersystem nach Anspruch 1, wobei die Motorimpulserzeugungsschaltung (3) mit einem nachgeschalteten Anschluss des Schaltgeräts (9) verbunden ist, um einen bidirektionalen Antrieb des Motors während eines Anliegens einer Energiequellenspannung zu errichten.

3. Steuersystem nach Anspruch 1 oder 2, wobei die erste Position gespeichert wird, wenn der Motor eingeschaltet ist.

4. Steuersystem nach einem der Ansprüche 1 bis 3, wobei der Korrekturwert auf der Grundlage von Drehzuständen des Motors gesetzt wird.

5. Steuersystem nach einem der Ansprüche 1 bis 3, wobei der Korrekturwert auf der Grundlage der an den Motor angelegten Energiequellenspannung gesetzt wird.

6. Steuersystem nach einem der Ansprüche 1 bis 5, wobei die Motorimpulserzeugungsschaltung (3) eine Grenzfrequenz erzeugt, welche abhängig von einer Wellenimpulsfrequenz variabel ist, welche eine Drehzahl des Motors angibt.

7. Steuersystem nach Anspruch 6, zudem mit
einem geschalteten Kapazitätsfilter (3a) zur Beseitigung einer Störung von dem Motor, wobei eine Grenzfrequenz des geschalteten Kapazitätsfilters abhängig von seinem Takteingang ist,
einer Impulsformungsschaltung (3b) zur Erzeugung eines die Drehzahl des Motors anzeigenden Wellenimpulssignals durch Wellenformung einer Ausgabe des geschalteten Kapazitätsfilters und
einer Impulserzeugungsschaltung (3g) zur Bereitstellung von Impulsen für den Takteingang des geschalteten Kapazitätsfilters, wobei die Impulse die Grenzfrequenz auf der Grundlage der Wellenimpulsfrequenz steuern.

## Revendications

1. Système de commande pour un élément mobile (ST;HD, SB, SC) comprenant :
un moteur à courant continu (11 ; 11a, 11b, 11c, 11d) pour établir un transfert de position de l'élément mobile d'une manière telle qu'après qu'une valeur correspondant à une première position de l'élément mobile soit mémorisée dans une mémoire (S104), même si l'élément mobile est dans une seconde position, l'élément mobile n'est retourné à la première position (S103) que sur manipulation d'un interrupteur (8a),
un dispositif de commutation (9) pour entraîner le moteur dans la direction normale ou inverse en le connectant à une source d'énergie (12) avec la polarité appropriée (S203, S206),
un circuit de génération d'impulsion du moteur (3) générant un signal impulsionnel qui est en synchronisation avec un déplacement de l'élément mobile et ayant une fréquence impulsionnelle qui est indicative du nombre de rotation du moteur,
un moyen de détermination de position pour déterminer une position actuelle de l'élément mobile en conformité avec le comptage du signal impulsionnel du circuit de génération d'impulsion du moteur (S306, S311),
**caractérisé en ce que**
le circuit de génération d'impulsion du moteur est connecté à un moyen de détection du courant du moteur (R) connecté au dispositif de commutation en série, moyennant quoi le courant du moteur n'est détecté que tandis que la tension de la source d'alimentation est fournie au moteur,
et **en ce que** le système de commande comprend, en outre, un moyen de détection pour détecter un instant où le moteur est arrêté (S210),
un moyen de mémorisation (2) pour mémoriser une valeur de correction qui est indicative d'un déplacement supplémentaire de l'élément mobile dû à l'inertie du moteur après son arrêt, et
un moyen de calcul pour calculer la valeur correcte correspondant à la position actuelle de l'élément mobile en ajoutant la valeur de correction à la valeur obtenue par le moyen de détermination de position (S211).

2. Système de commande selon la revendication 1, dans lequel le circuit de génération d'impulsion du moteur (3) est connecté à une borne côté aval du dispositif de commutation (9) pour établir un entraînement bidirectionnel du moteur tandis qu'une tension de la source d'alimentation est fournie.

3. Système de commande selon la revendication 1 ou 2, dans lequel la première position est mémorisée lorsque le moteur est en rotation.

4. Système de commande selon l'une quelconque des revendications 1 à 3, dans lequel la valeur de correction est établie sur la base des conditions de rotation du moteur.

5. Système de commande selon l'une quelconque des revendications 1 à 3, dans lequel la valeur de correction est établie sur la base de la tension de la source d'alimentation appliquée au moteur.

6. Système de commande selon l'une quelconque des revendications 1 à 5, dans lequel le circuit de génération d'impulsion du moteur (3) génère une fréquence de coupure qui est variable en fonction de la fréquence d'impulsion d'ondulation qui est indicative du nombre de rotation du moteur.

7. Système de commande selon la revendication 6, comprenant en outre
un filtre à condensateur commuté (3a) pour éliminer le bruit provenant du moteur, une fréquence de coupure du filtre à condensateur commuté étant fonction de son entrée d'horloge,
un circuit de mise en forme d'impulsion (3b) pour générer un signal impulsionnel d'ondulation indicative du nombre de rotation du moteur par mise en forme d'onde d'une sortie du filtre à condensateur commuté, et
un circuit de génération d'impulsion (3g) délivrant les impulsions à l'entrée d'horloge du filtre à condensateur commuté, les impulsions commandant la fréquence de coupure sur la base de la fréquence d'impulsion d'ondulation.
